# EUROPEAN PATENT SPECIFICATION

(11) **EP 0 578 602 B1**
(45) Date of publication and mention of the grant of the patent: **09.08.1995**
(21) Application number: 93500097.6
(22) Date of filing: 06.07.1993
(51) Int. Cl.: B65G 47/14, B65G 29/00, B65G 47/24

(54) **Machine for automatically positioning and aligning containers**
Einrichtung zum automatischen Positionieren und Ausrichten von Behältern
Machine pour positioner et aligner automatiquement des récipients

(30) Priority: 11.11.1992 ES 9202274; 07.07.1992 ES 9201508; 16.02.1993 ES 9300301
(43) Date of publication of application: 12.01.1994
(73) Proprietor: Marti Sala, Jaime, E-08017 Barcelona (ES)
(72) Inventor: Marti Sala, Jaime, E-08017 Barcelona (ES)
(74) Representative: Manresa Medina, Enrique

(56) References cited:
- EP-A- 0 432 081
- AU-D- 3 959 089
- DE-A- 2 651 495
- DE-A- 2 928 354
- GB-A- 1 558 379
- US-A- 4 681 209

## Description

### Background of the invention

This invention relates to a machine intended for automatically positioning and continuously feeding containers, for example bottles or other hollow articles made from synthetic material, which may be of very different sizes and shapes. This machine is designed for continuous feeding of other machines such as high production filling machines or similar equipment and is able to carry out this function owing to the large number of containers which it can position correctly and feed per unit of time.

Known machines of the type to which the present invention relates include in general:
a) a hopper of any shape or dimension provided with an opening to receive in bulk containers that fall onto a bottom plane whose edges are at a distance from the side wall of the hopper providing a peripheral space allowing the passage of the containers;
b) a structure provided with displacement means in enclosed circuit, located below the bottom plane, including, fully or in part:
   - a plurality of detachable container holding elements removable mounted at the periphery of the structure defining a series of recesses adapted to receive containers in a lying position and provided with retaining means for one part of the containers, namely their neck, in such a way as to release them in a predetermined position, usually with the neck upward;
   - a plurality of discharge chutes provided under the recesses for receiving and transferring the containers, correctly oriented, towards an exit conveyor that feed, for example, a bottling line;
c) a plane or shelf, which may be adjustable in height, located below the recesses and over the discharge chutes, designed to support the containers when they are conveyed by the holding elements defining the recesses for receiving and retaining them in a lying position, the plane or shelf being provided with an opening in an unloading area through which the containers drop when moved into position thereover by the container holding elements.

Machines known to the applicant are the following grouped by the function they perform:
a) Aidlin machine (US-A-3, 295, 659) relates to a machine comprising a hopper into which the containers or bottles which are to be sorted are randomly loaded, having an inclined axis, an inclined disc constituting the bottom of the hopper and adapted to rotate about the inclined axis, a plurality of openings at the periphery of the disc each adapted to receive and pass one container while retaining the neck which is supported on the disc for transporting them from a receiving zone to an unloading zone, associated with a fixed plate beneath and parallel to the rotatable disc providing a support for the container bodies during their rotation and having a release opening in an upper part of the plate aligned with the path of movement of the containers as the disc rotates, so that the containers fall, by gravity, one by one in an upright position into a fixed chute or guideway located below the opening;
AU-B-499,038 (HOEHN) which discloses the basic technical rule which allows to carry out the function of aligning the containers, previously oriented in upright position in the same machine, according to a principle similar to the one disclosed in above patent US-A-3,295,659, from a plurality of falling chutes into which the containers fall, in an upright position, arranged under each of the openings, which are made from annular and radial elements located on the periphery of a rotatory disc, rotating at same speed as this later and associated to a fixed support and to a recovery conveyor.

The bottom of the said machines and/or the said rotatable disc or plane bearing the openings, is, in general, inclined, though it can be constituted in a shape of a cone or frustum having a vertical axis, as this solution can be found in the state-of-the-art, and it appears disclosed, for example, in patent DE-A-277347 (Polte) and patent US-A-1,823,995 (Streby), which refers to machines of the same type as the above stated, in whose case the inclined plane of the rotatory element will the containers move by its slope upward the periphery, defining a guiding duct which promotes the passage of the containers toward the openings associated to the falling chutes. The said bottom plane, according to above backgrounds, are provided with a rotation movement in same or opposite sense to the one of the openings for collecting and conveying the containers.

On the other hand, the problem for adapting a machine of this type to different container shapes and sizes (length and cross section or thickness) was overcome in several ways. We are stating below the most relevant patents referring to this aspect:

GB-A-1,558,379 (Hoehn) which refers to a machine as the disclosed in patent AU-B-499,038, of same applicant, in which means have being devised to adjust the gap between the internal and the external walls and/or between the end walls of each opening to collect, house, the containers, to accommodate the space of the said openings to the container size and shape, the said means comprising plates with slides which provide a displacement allowing to adapt the passageway of the opening, and which are locked to bolts by nuts;

DE-A-26 51 495 (Rationator) which refers to a machine as the one disclosed in patent AU-B-499,038, wherein the openings are pierced on the edge of the disc, open at the exterior, whose edge is formed by a series of continuous, peripheral, exchangeable segments fixed to the periphery of the rotatable disc;

US-A-4,681,209 (MARTI) which refers to a machine as the one disclosed in patent AU-B-499,038, wherein the openings are formed by radial, peripheral, detachable and exchangeable parts, which define, two by two, the areas to house the containers delimited between their sides, the edge of a rotatable disc and the hopper wall.

However, none of above solutions is completely satisfactory as much for the adaptability of the machine to several sizes and/or formats of the containers, as for the conditions in which the said containers are conveyed, following drawbacks having to be pointed out:
- the solution disclosed in patents AU-B-499,038 and GB-A-1 558 379 requires individual parts associated to each opening being adjusted, which means a delicate adjustment which must be carried out by skilled personnel; there exists the risk that some mismatching or position-related impairment of some of the parts occur due to impacts caused by clogging of the containers during their movement; summarizing, this solution requests handling a great number of complex components with subsequent labour cost;
- the solution of patent DE-A-26 51 495, which requires some continuous peripheral segments means following drawbacks:
- the use of mechanized parts of a certain length and, therefore, of a limited modularity, different for each format of container;
- locking with screws the segments to the periphery of the disc, which requests a delicate and time spending handling at the installation point, and which, in general, demands an access structure provided at the top, within the machine, and/or the use of lifting means for evacuating the segments;
- frictions with the periphery of the receptacle, as the openings are outwardly open , which can provoke damages on the containers (namely, bearing in mind the thin thickness of the wall, in a number of cases), as well as their braking during their access to the openings and on the area of fall downward the evacuation ducts;
- the solution of US-A-4,681,209 patent has a risk similar to the one mentioned for the case of above Australian and British patents (HOEHN), namely the mismatching or impairments of the position devised for the unit radial parts, by accidental causes, and, as the opening are outwardly open damages can likewise be produced to the containers, as well as problems of braking at the step of access of the containers within the opening and the unloading area.

Of course, a machine as the one disclosed in patent US-A-3,295,659 would request, for its adaptation to different formats of the containers, changing the whole disc provided with openings with the subsequent cost and labour for its execution.

It must be pointed out, in addition, that the conditions of container conveyance according to the principle of taking them housed in openings pierced in a rotatory element such as a disc, requires, for a drive stability, a significant thickness in the disc which allows to encompass, at least, a significant part of the thicker part of the containers as it is disclosed in above patent US-A-3,295,659, with subsequent production cost, weight, power consumption and, in general, always a part of the container remains on the top and another under the drive element formed by the said openings with which it sustains a resistance to the forward move because of the atmosphere within the machine which can affect the positioning stability of light containers such as plastic bottles treated in these machines, namely, at high speeds of the said drive element.

### Brief summary of the invention

One object of the invention is to provide a machine according to claim 1.

One object of this invention is to produce a machine of above disclosed type e.g. like the machine of EP-A-0 432 081 with adaptation to several formats of the containers to be treated which overcomes every above mentioned drawbacks, due to the use of:
- a single rotatable annular element or disc which can be provided with openings having fixed sizes in an area which corresponds to the peripheral portion of the container bottom;
- a plurality of hollow pieces, frame-shaped, as container holders, significantly rectangular, detachable and exchangeable, through which the containers can pass, which are engaged socketed in each of the openings of the rotatory annular disc or element, and within whose parts the containers are virtually fully housed, these hollow parts having internal sizes compatible with the ones of the type of containers to uprightly position and external sizes compatible with those of the openings of the rotatory plane, which are fixed for a given machine, whichever is the type of container;
Above hollow parts can be obtained through moulding in plastic material or metal.

The above and other objects, advantages and features of the present invention will become more apparent from the following description of certain preferred embodiments thereof.

### Brief description of the drawings

The invention will now be described in detail with reference to the accompanying drawings wherein:

Fig. 1 is a perspective view of a container holder support means in the form of a disc provided with peripheral openings aimed to receive socketed at least a part of the body of a frame shaped container holder with an inclined flange projecting upwardly, illustrated before its positioning attached to the disc.

Fig. 2 is a view similar to that of Fig. 1 but showing a frame shaped container holder without an inclined projecting flap.

Fig. 3 is a partial view similar to that of Fig. 1 and 2 with a disc provided with apertures open at the exterior along its edge.

Fig. 4 is a cross-sectional view of a longitudinal part development of the periphery of the disc showing the means carrying the container holders removably fitted to said disc's apertures.

Fig. 5 is a perspective view on an enlarged scale of a container holder like the one in Fig. 2.

Fig. 6 is a top plan view of an alternative embodiment of the container holder with another attachment means to a disc like the one represented in Fig. 3.

Fig. 7 is a vertical central cross-sectional view of part of a machine according with the invention.

Fig. 8 is a view similar to that of Fig. 7 showing an alternative embodiment of the invention.

Fig. 9 is a cross-sectional view showing in an enlarged scale part of the machine with a means cooperating in the positioning of the containers into the container holders.

Fig. 10 is a top plan view showing a preferred structure of a container holder support means.

Fig. 11 is a perspective view of a machine according with the invention provided with radial rotary arms over the bottom of the hopper.

Fig. 12 is a vertical central cross-sectional view of part of the machine of Fig. 11.

Fig. 13 is a perspective view showing an alternative embodiment of the cited container holders and related falling chutes.

Fig. 14 is a part perspective view of another embodiment of the invention where the frame shaped container holders are attached to the edge of a rotatable disc.

Fig. 15 is a cross-sectional view taken from lines XV-XV of Fig. 14.

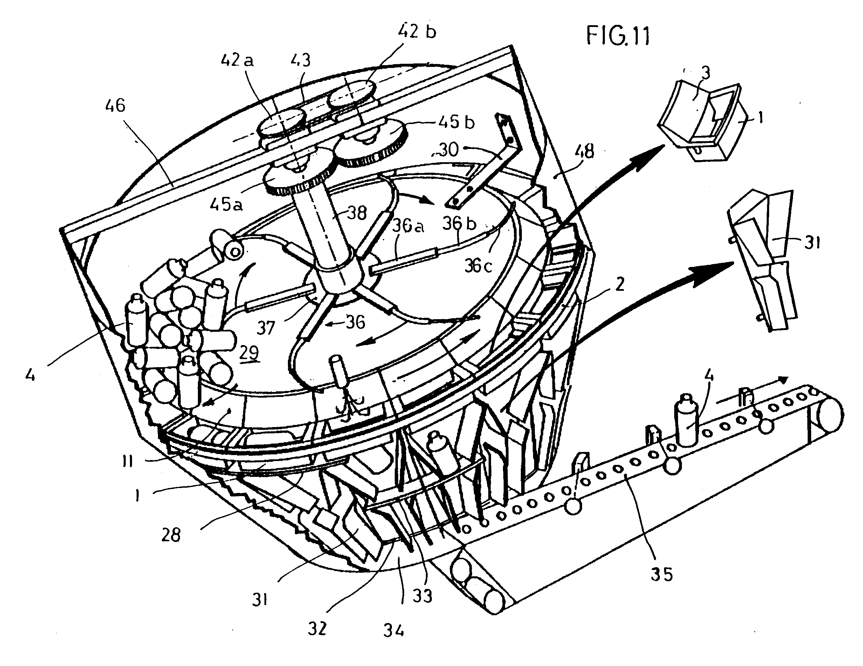

As it can be seen in Fig 11 the machine of this invention comprises a basic structure like the one in prior cited US-A-4,681,209 patent including a hopper 48 provided with an opening for loading in bulk containers 4 that fall onto a bottom member having edges spaced from the hopper wall to provide a peripheral space through which the containers can pass.

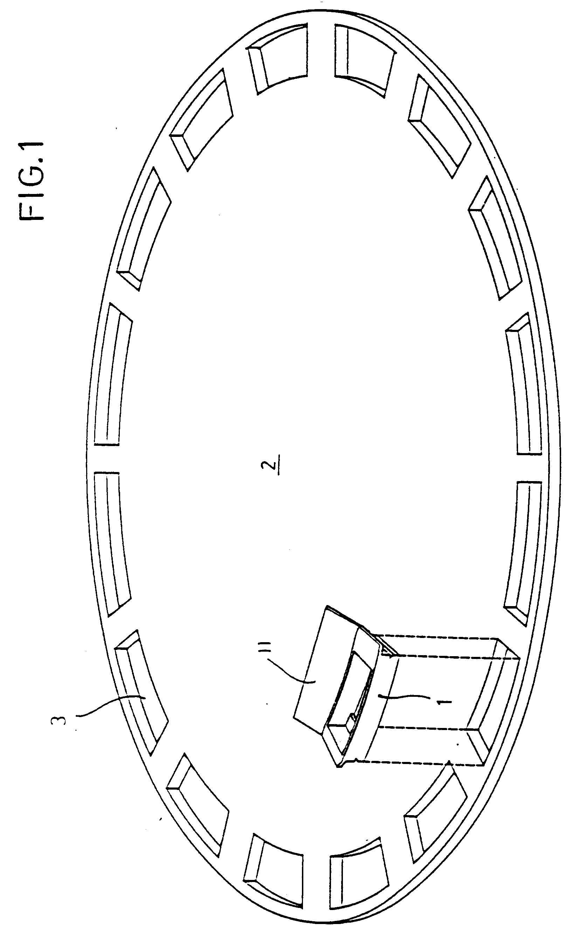

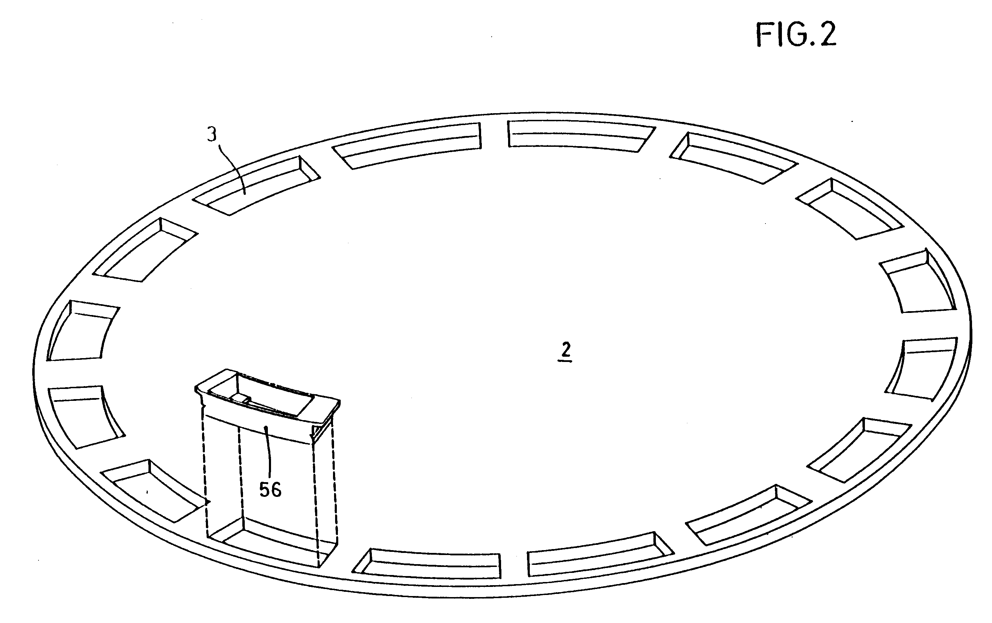

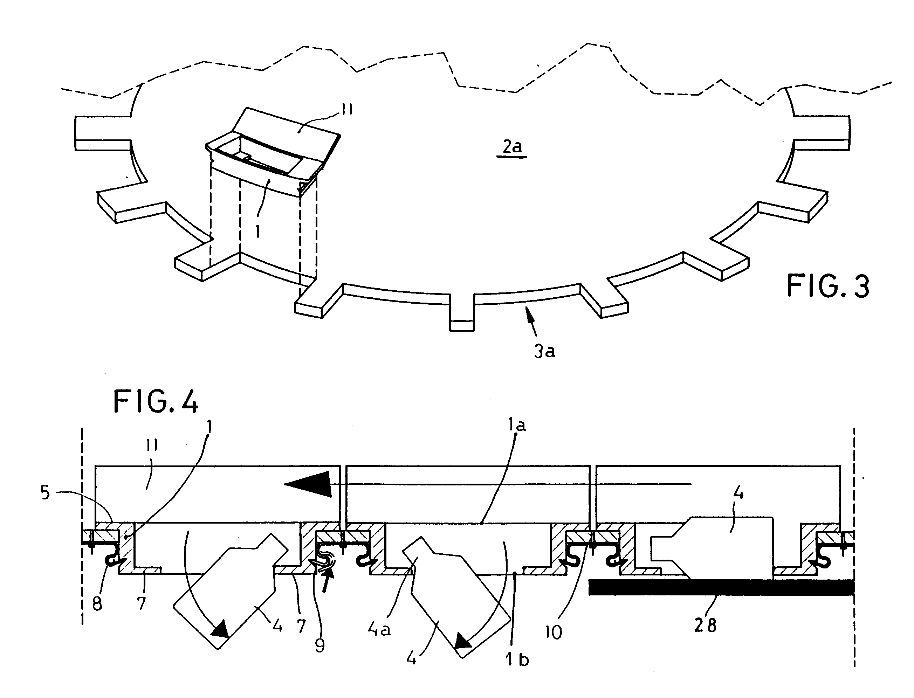

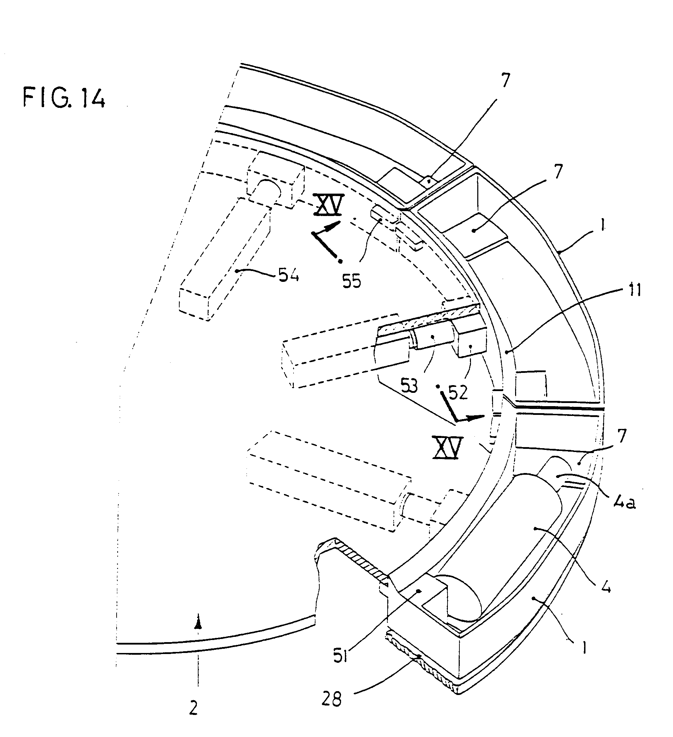

The invention is mainly based in an exchangeable container holder, constituted by a hollow piece 1, frame shaped, forming recesses aimed to receiving and holding the containers 4 in a lying position from said peripheral space of said bottom, said container holders having an inner dimension matching the one of said containers 4 so that they can receive must of the container body and an external dimension allowing that at least one part of its body fits in corresponding apertures 3, 3a of a rotatable disc 2, 2a (Fig. 1 to 4 and 7-13) placed under said hopper's bottom or in the peripheral portion of the hopper's bottom (Fig. 14). The containers 4 rest on a container support shelf 28 until reaching a discharge section (see Fig. 4), according to the described technical rule for upright positioning.

As it can be seen in Figs. 1 to 10 and 13, each container holder 1, 56, 57, comprises:
- in this upper part a charging opening 1a for allowing the containers to pass therethrough and two external overhanging flanges 5 aimed to seat on the rotatable plane 2, 2a;
- in its lower part, a discharging opening 1b limited by two coplanar flanges 7, aimed to sustain the neck 4a of the containers 4, and positioned beneath the rotatable disc 2 so that the center of gravity of said containers lies under the lower surface of said disc 2.

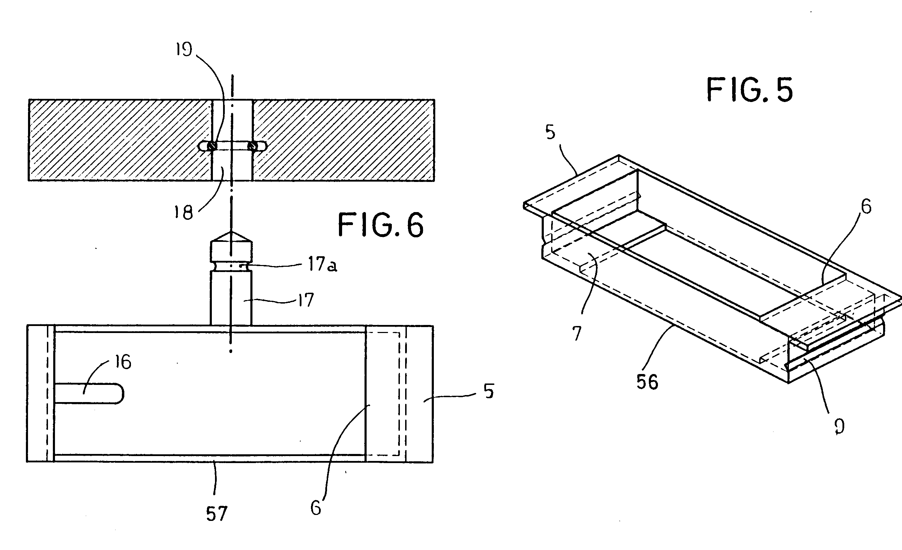

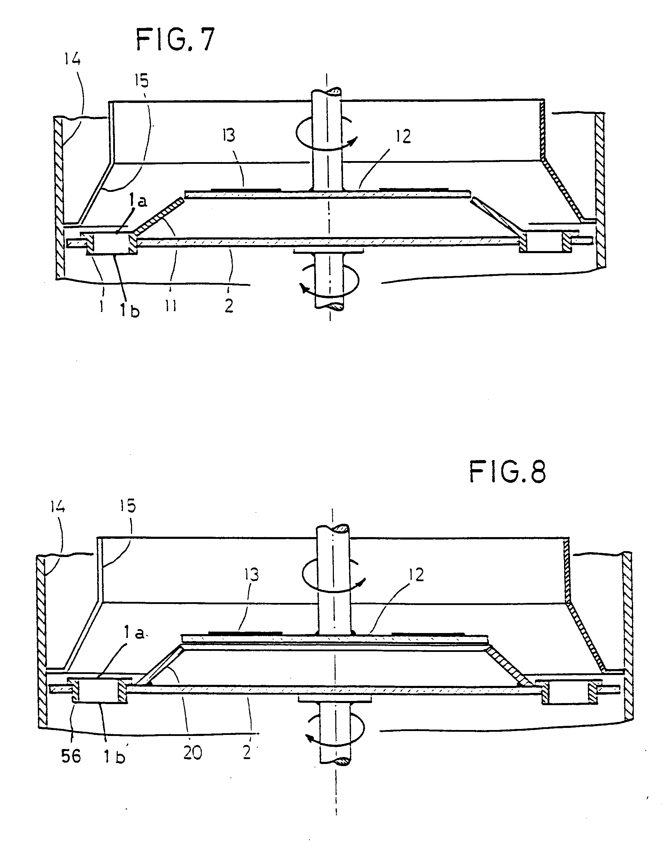

In the embodiment shown in Figs. 5 and 6, the charging opening of container holder 1, 56, 57 are limited by a further flange 6 parallel to said coplanar flanges 7 opposing the bottom of the containers during the displacement avoiding their positioning over flange 7.

The container holder 57 in Fig. 6 has its discharge opening 1b limited at one of its ends by a rod 16 opposite to overhanging flange 7. This rod is aimed to enter the mouth of wide mouth containers like cans to support them and allowing its upright positing according to the well know technique described in cited prior patents. The container holders 57 also bears at their rear side a protruding rod 17 with a pointed end and an annular groove 17a near this end aimed to be incorporated socketed into a receptacle member comprising an aperture 18 and an elastic retaining ring 19.

As it can be seen in Fig 4, each of the single pieces 1, are removably held socketed within apertures 3, 3a, of the rotatable disc 2 thanks to elastic catch fingers 8, fixed to said rotatable disc 2 by screws 10, and with its ends engageable in retaining grooves 9 on the outer side walls of container holders 1.

In the embodiment illustrated in Figs. 7 and 8 the bottom of the hopper is constituted by another rotatable disc revolving in an opposite direction as the disc 2, so as to return containers incorrectly positioned towards the periphery in the direction of a charging area. The disc 12 is advantageously provided with radial members, as roughness strips 13, in order to better draw the containers without damaging them.

An inclined plane directed towards the central part of the hopper joins the bottom's edge and the inner edge of the charge opening 1a of the frame shaped container holders 1.

Said inclined plane is constituted by a projecting flange 11, which extends upwards from the inner edge of the charging opening 1a of the container holder 1.

As it can be seen in Fig 8 said inclined plane can alternatively be constituted by a frustum conical wall 20 integral with the rotatable disc 2 whose lower edge lies adjacent to the inner border of the charge opening 1a of each of the container holders 1.

In both cases (Figs. 7 or 8), said inclined plane converges with another upper plane pertaining to a wall 15 superimposed and fixed to the inner hopper wall 14 providing a channel which assist in the entrance of the containers 4 towards the recesses of said container holders 1.

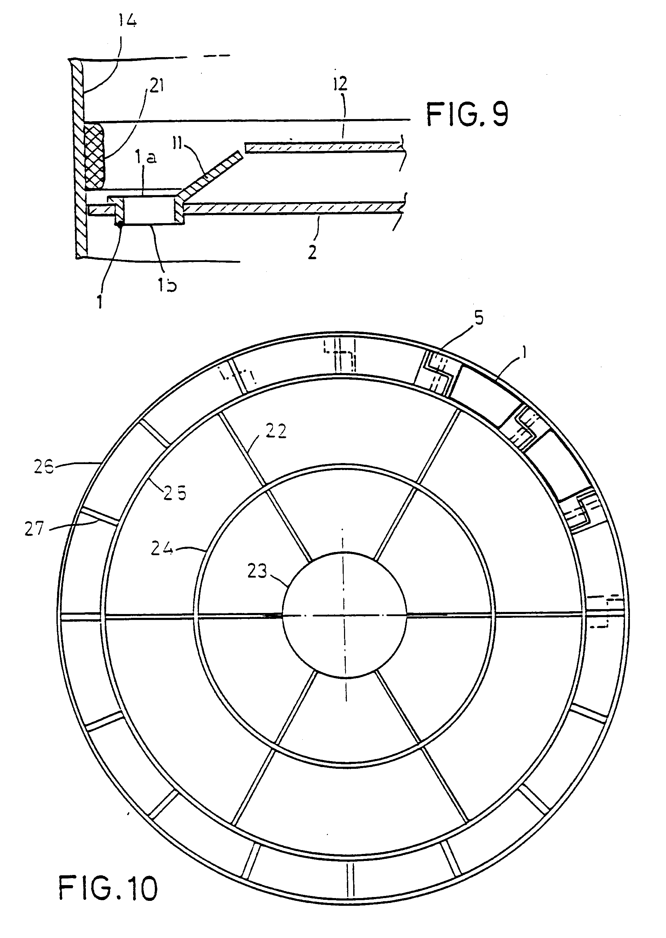

Fig. 9 shows an elongated pad profile 21 fixed to the inner hopper wall 14 covering the space between the outer edge of the charge opening 1a of each container holder 1 and said inner hopper wall 14 and extending over the outer peripheral portion of said frame shaped container holders 1, cooperating in the positioning of the containers 4 into the recesses of said container holders 1.

Fig 10 illustrates a preferred structure for the rotatable plane 2, comprising a plurality of radial rods 22 connected to a central ring 23, and to an intermediate ring 24 and a peripheral crown constituted by two spaced rings 25 and 26 associated by partition walls 27 forming apertures to receive socketed the container holders 1.

In the machine illustrated in Fig 11 the hopper's bottom member is constituted by an inclined fixed disc 29 attached through support 30 to the hopper inner wall. Over said disc 29 a device for removing the accumulated containers and/or for moving the incorrectly positioned containers towards a charging area is located. Said device comprise a plurality of radial arms 36 integral with a rotatable central bushing 38. Said radial arms 36 are connected to a disc portion 37 coaxial and integral with the bushing 38, and comprise a first radially inner rigid portion 36a, a middle resilient part 36b slightly curved and a third radially outer part 36c extremely curved towards the back part with regard to the front of the rotating movement and constituted by smooth and flexible elements which extending during operation to a position above said container holders, according to claim 17.

Fig 11 also shows a series of falling chutes 31 integral with said rotatable disc 2 and with a second parallel rotatable disc 32, placed at a lower level as well as an intermediate fixed shelf which divides the falling of the containers in a double sequence as disclosed in cited US-A-4,681,209. Said falling chutes align the containers along a fixed bottom 34 from which they are evacuated by an exit conveyor 35.

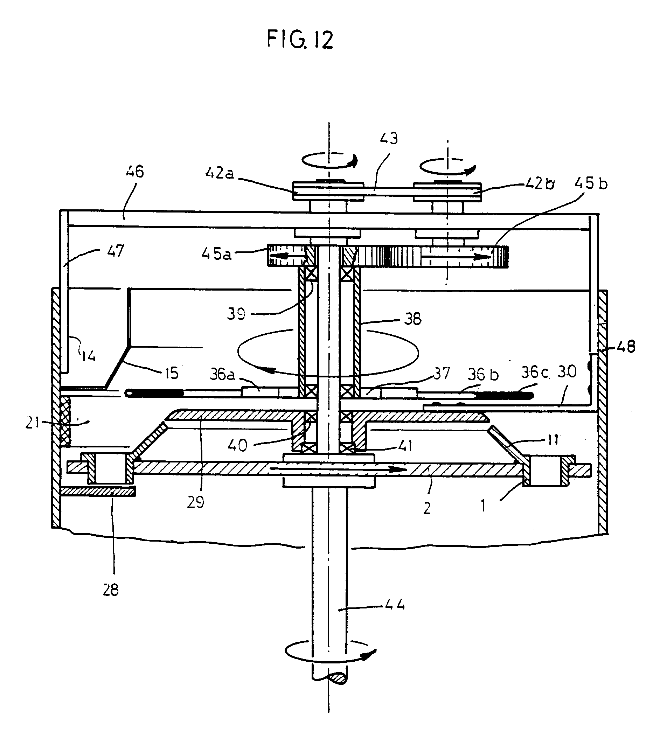

The central bushing 38 is driven by a reversal rotating mechanism which can clearly be understood on sight of Fig. 12. This figure shows a central axis bearing the rotatable disc 2 with peripheral apertures where the container holders 1 are socketed, said axis extending upwardly over said rotatable disc 2 and being connected to a first wheel 42a which is linked through an endless belt 43 to a second coplanar wheel 42b which is coupled to a first gearwheel 45b interlocked with a second coplanar gearwheel 45a fixed at one of the ends of the central bushing 38. Some bearings 39, 40 and 41 are interposed between the movable parts and the fixed ones as it clearly can be seen from this figure. This reversal rotating mechanism is supported by a bridge 46 sustained by brackets 47 integral with the wall of the hopper 48.

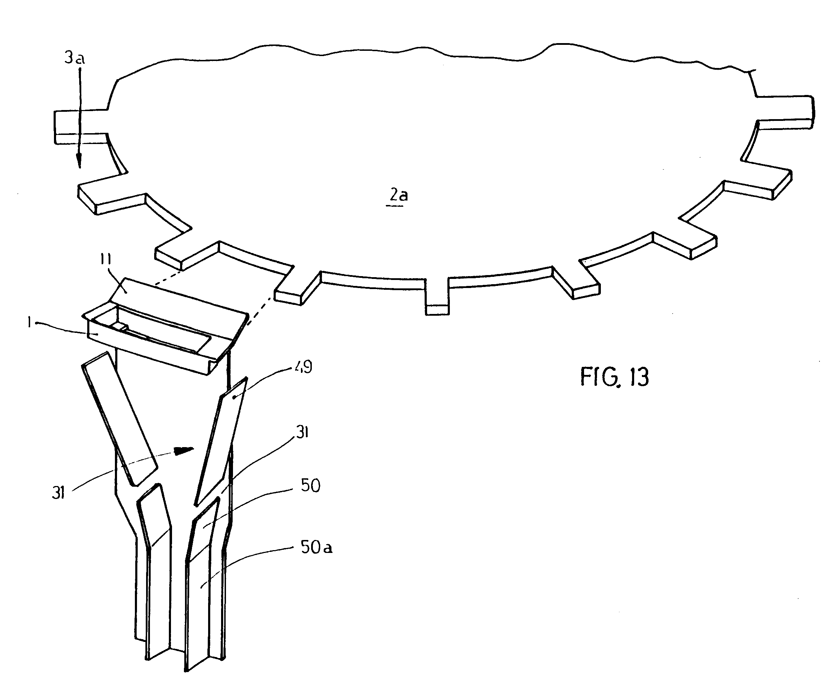

Fig.13 shows another embodiment of the invention where a rotatable disc 2 like the one in Fig 3 and removable retaining means as the ones detailed in Fig 6 are used. In this case the frame shaped container holders 1, are connected through its rear wall to the falling and aligning chutes 31. Said falling chutes comprise a rear plate to which a first pair of side convergent plates 49 and a second pair of side parallel plates 50 with an upper convergent portion 50a are attached.

Fig.14 shows still another embodiment of the invention where the container holders 1 are located adjacent the outer edge of a rotatable disc 2. Over said disc another disc (static or rotatable and not illustrated) will be arranged, the upwardly projecting flanges 11 joining its outer edge to the inner border of the charging opening of the pieces 1 as previously described.

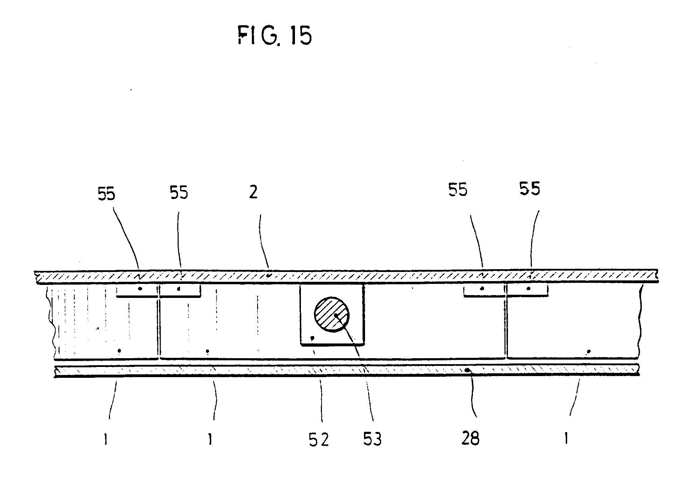

As it can be seen in Figs. 14 and 15 in this embodiment immobilising and positioning means have been foreseen preventing pivoting movement of the container holders 1.

Said means are constituted by an enlarged prismatic-shaped portion 52 at the starting part of an axial member 53 emerging from the rear side of said frame shaped container holders and removably attached to some female connector 54 (like the ones described in Fig. 6). The upper part of said enlarged portion 52 lies on the bottom of the disc 2, just under its outer edge. In addition to this, two protruding parts 55 emerge from the rear side of said frame shaped container holders 1, near its two ends , the upper part of them also lying on the bottom of the disc 2 just under its outer edge.

As it can be seen in Fig. 15 the container holders 1 located adjacent the outer edge of the disc 2 have between theirs ends a slight looseness avoiding jamming.

The machine with the features previously described is easily adaptable to different sizes and shapes of the containers to be handled and provides also a transport of the containers with a minimum of interference with the static parts therefore involving a careful handling. The conditions of the attachment between the container holder means employed and the support (rotatable disc) are also very stable.

## Claims

1. Machine for automatically positioning and aligning containers (4), such as plastic bottles, comprising:
a main hopper (48) for receiving a plurality of randomly positioned containers and having a central part;
a side wall (14) on said main hopper;
a bottom (12, 29) in said main hopper having a peripheral portion spaced from said side wall to provide a space through which containers on said bottom can pass;
container holder support means (2, 2a) having a peripheral portion and being supported below said hopper for movement of said peripheral portion thereof in a path adjacent said peripheral portion of said bottom;
means (44, 45) for driving said container holder support means in said path;
container holder means (1, 56, 57) mounted on said container holder support means for movement therewith and having recesses therein for receiving and holding containers in a lying position from said peripheral portion of said bottom;
discharge opening (1b) in said container holder means for allowing containers to pass therethrough;
container support shelf means (28) extending below said container holder means (1, 56, 57) for supporting containers in a lying position in said recesses during movement of said container holder means;
a discharge section in said support shelf means for discontinuing support of containers at a predetermined location so that containers in said container holder means pass through said discharge openings (1b) at said discharge section;
tilting means (6, 7, 16) on said container holder means engaging a part of each container for tilting each container into a predetermined position as each container passes through said discharge openings at said discharge section;
chute means (31) mounted below and movable with said container holder means for receiving, orientating and guiding containers passing through said discharge openings into a predetermined position, each chute means having a lower exit portion, **characterized in that:**
said container holder means comprise a plurality of exchangeable hollow frame-shaped container holders (1, 56, 57) each having inner dimensions forming one of said recesses so that each recess contains most of a container body therein;
each container holder includes a charging opening (1a) for passage of a container therethrough into said recess; and that
an inclined plane means, movable together with the container holders and directed upwardly towards the central part of said main hopper (48), is disposed between said bottom (12, 29) of said main hopper and each of said charging openings (1a) of said container holders (1, 56, 57).

2. Machine as claimed in Claim 1 characterized in that said container holder support means (2, 2a) comprises a rotatable disc and plurality of apertures (3, 3a) in said peripheral portion thereof, and said container holders (1, 56, 57) have external dimensions to facilitate fitting at least part of one of said container holders in one of said apertures in said rotatable disc (2, 2a).

3. Machine as claimed in Claim 1 characterized in that said container holder support means comprises a rotatable disc (2) having an outer edge, and said container holders (1) are disposed adjacent said outer edge of said rotatable disc.

4. Machine as claimed in Claim 1 characterized in that said charging opening (1a) of each container holder has an inner edge, and said inclined plane means comprises a flange (11) projecting upwardly from said inner edge of each charging opening.

5. Machine as claimed in Claim 1 characterized in that said charging opening of each container holder has an inner edge, and said inclined plane means comprises a frustum conical wall (20) mounted on said container holder support means (2) and having a lower edge in adjacent spaced relation to said inner edge of each of said charging openings of said container holders.

6. Machine as claimed in Claim 1 characterized in that it further comprises a second inclined plane means (15) mounted on said side wall (14) of said main hopper and superimposed relative to said container holders so that both inclined plane means converge toward said container holders (1, 56, 57).

7. Machine as claimed in Claim 1 characterized in that it further comprises:
an outer edge on said charging opening (1a) of each of said container holders; and
an elongated pad profile (21) mounted on said main hopper side wall (14) and protruding over at least a part of a space between said outer edge of each charging opening of said container holders and said main hopper side wall.

8. Machine as claimed in Claim 2, characterized in that it further comprises means (8, 9, 17, 18, 19) for removably fitting said container holders in said apertures (3, 3a).

9. Machine as claimed in Claim 8 characterized in that said means for removably fitting said container holders in said apertures comprise:
outer side walls on each of said container holders; a retaining groove (9) on each of said outer side walls; and
resilient retaining means (8) mounted on said container holder support means (2, 2a) and engageable in said retaining grooves for holding said container holders in said apertures.

10. Machine as claimed in Claim 3 characterized in that it further comprises:
retaining openings (18) in said outer edge of said rotatable disc;
resilient retaining means (19) in said retaining openings; a mounting element (17) projecting from each of said container holders insertable in one of said retaining openings; and
an annular groove (17a) on each of said mounting elements (17) engageable with said resilient retaining means (19) for removably retaining said container holders on said rotatable disc.

11. Machine as claimed in Claim 1 characterized in that said tilting means comprises:
two opposite ends in each of said discharge openings:
two coplanar flanges (7) at said two opposite ends for supporting a neck (4a) of a container (4) received in a container holder;
and
a further flange (6) parallel to said coplanar flanges limiting said charging opening adjacent one of said opposite ends and engageable with a bottom of a container.

12. Machine as claimed in Claim 1 characterized in that said tilting means comprises:
two opposite ends in each of said discharge openings; a rod (16) at one of said ends and a flange (6) at the other of said ends for supporting a neck of a container when received in a recess of a container holder.

13. Machine as claimed in Claim 2 characterized in that it further comprises supporting flanges (5) on each container holder for supporting said container holders on said rotatable disc adjacent said apertures therein.

14. Machine as claimed in Claim 3 characterized in that it further comprises immobilizing and positioning means (52-55) for preventing pivoting movement of said container holders relative to said rotatable disc.

15. Machine as claimed in Claim 14 characterized in that said immobilizing and positioning means comprises:
a plurality of receptacle members (54) substantially circumferentially spaced on the lower surface of said rotatable disc in adjacent spaced relationship with respect to said outer edge thereof;
a connecting member (53) projecting from each of said container holders for releasable engagement with one of said receptacle members (54), said connecting member including an enlarged prismatic-shaped portion (52) at its starting part and having an upper surface engaging said lower surface of said rotating disc adjacent said outer edge thereof when said containers holders are mounted on said rotating disc; and
at least two bracing members (55) projecting from each of said container holders proximate the ends thereof and having upper surfaces engaging said lower surface of said rotating disc adjacent said outer edge thereof when said container holders are mounted on said rotating disc (2).

16. Machine as claimed in Claim 1 characterized in that said container holders are each connected to a respective chute means (31) forming an exchangeable unit of a combined container holder and chute means.

17. Machine as claimed in Claim 1 characterized in that it further comprises:
an upwardly extending central axis for said main hopper and container holder support means;
a central bushing (38) rotatably mounted on said main hopper coaxially with said central axis;
a plurality of radial arms (36) integral with said central bushing and positioned in said main hopper;
radially outer ends on said arms each comprising an elastic portion (36b, 36c) backwardly curved with respect to the rotating direction of said arms for engaging and removing containers wrongly positioned relative to said container holders towards a charging area for said main hopper; and
means for driving said central bushing in a direction of rotation opposite to the direction of movement of said container holder means.

18. Machine as claimed in Claim 17 characterized in that each of said radial arms comprises:
a first radially inner rectilinear and rigid part (36a);
a middle resilient and curved part (36b); and
radially outer curved part (36c) comprising a smooth and flexible element extending during operation to a position above said container holders.

## Patentansprüche

1. Vorrichtung zur automatischen Positionierung und Aufreihung von Behältern (4), beispielweise Kunststoffflaschen, mit einem Hauptgefäß (48) zur Aufnahme mehrerer wahllos angeordneter Behälter, das einen zentralen Teil besitzt, einer Seitenwand (14) an dem Hauptgefäß, einem Boden (12, 29) im Hauptgefäß mit einem Umfangsteil, der von der Seitenwand mit Abstand getrennt ist, um einen Raum zu schaffen, durch den die auf dem Boden befindlichen Behälter hindurchgehen können, einer Behälterhalterstützeinrichtung (2, 2a) mit einem Umfangsteil die unter dem Gefäß abgestüzt ist, so daß sich der genannte Umfangsteil in einer Bahn neben dem Umfangsteil des Bodens bewegen kann, einer Einrichtung (44, 45) zum Antreiben der Behälterhalterstützeinrichtung in der genannten Bahn, einer Behälterhaltereinrichtung (1, 56, 57), die auf der Behälterhalterstützeinrichtung so befestigt ist, daß sie sich mit ihr bewegt und die Aussparungen zur Aufnahme der Behälter vom Umfangsteil des Bodens und zum Halten der Behälter in einer liegenden Position aufweist, einer Austragsöffnung (16) in der Behälterhaltereinrichtung, die den Durchtritt der Behälter ermöglicht, einer Behälterstützsimseinrichtung (28), die sich unter der Behälterhaltereinrichtung (1, 56, 57) erstreckt und zur Abstützung der Behälter in einer liegenden Position in den genannten Aussparungen während der Bewertung der Behälterhalterungseinrichtung dient, einem Austragsabschnitt in der Stützsimseinrichtung zum getrennten Abstützen der Behälter in einer vorgegebenen Lage, so daß die Behälter in der genannten Behälterhaltereinrichtung in diesem Austragsabschnitt durch die Austragsöffnungen (16) hindurchgehen, einer auf der Behälterhaltereinrichtung befindlichen Neigungsvorrichtung (6, 7, 16), die mit einem Teil jedes Behälters in Berührung tritt, um jeden Behälter in eine vorbestimmte Position zu neigen, wenn der Behälter durch die Austragsöffnungen in dem genannten Austragsabschnitt hindurchgeht, einer Rinnenvorrichtung (31), die unter der Behälterhaltereinrichtung angebracht und zusammen mit dieser beweglich ist und zur Aufnahme, Ausrichtung und Führung der durch die Austragsöffnungen gehenden Behälter dient, und zwar in eine vorbestimmte Position, wobei jede Rinneneinrichtung einen unteren Austrittsteil aufweist, dadurch gekennzeichnet, daß die Behälterhaltereinrichtung mehrere austauschbare, hohle, rahmenförmige Behälterhalter (1,56,57) aufweist von denen jeder Innenabmessungen besitzt, welche eine der genannten Aussparungen bilden, so daß jede Aussparung den größten Teil eines Behälterkörpers aufnehmen kann, daß jeder Behälterhalter mit einer Austrittsöffnung (1a) versehen ist, durch die ein Behälter in die genannte Aussparung eintreten kann, und daß eine geneigte Ebene, die zusammen mit den Behälterhaltern beweglich und gegen den Mittelteil des Hauptgefäßes (48) nach oben gerichtet ist, zwischen dem Boden (12, 29) des Hauptgefäßes und jeder Austragsöffnung (1a) der Behälterhalter (1, 56, 57) angeordnet ist.

2. Vorrichtung nach Anspruch 1, **dadurch gekennzeichnet**, daß die Behälterhaltertrageinrichtung (2, 2a) eine drehbare Scheibe und mehrere Öffnungen (3, 3a) im Umfangsteil der Scheibe aufweist und daß die Behälterhalter (1, 56, 57) Außenabmessungen besitzen, die so geartet sind, daß wenigstens ein Teil eines der Behälterhalter in eine dieser Öffnungen in der drehbaren Scheibe (2, 2a) leicht hineinpaßt.

3. Vorrichtung nach Anspruch 1, **dadurch gekennzeichnet**, daß die Behälterhaltertrageinrichtung eine drehbare Scheibe (2) mit einem Außenrand aufweist, und daß die Behälterhalter (1) neben diesem Außenrand der drehbaren Scheibe angeordnet sind.

4. Vorrichtung nach Anspruch 1, **dadurch gekennzeichnet**, daß die Austragsöffnung (1a) jedes Behälterhalters einen Innenrand aufweist, und daß die geneigte Ebene einen Flansch (11) bildet, der von dem Innenrand jeder Austragsöffnung nach oben vorsteht.

5. Vorrichtung nach Anspruch 1, **dadurch gekennzeichnet**, daß jede Austragsöffnung jedes Behälterhalters einen Innenrand aufweist und daß die geneigte Ebene mit einer kegelstumpfförmigen, konischen Wandung (20) versehen ist, die auf der Behälterhalterstützeinrichtung (2) angebracht ist und einen unteren Rand besitzt, der mit Abstand zum Innenrand jeder Austragsöffnung der Behälterhalter angeordnet ist.

6. Vorrichtung nach Anspruch 1, **dadurch gekennzeichnet**, daß eine zweite geneigte Ebene (15) vorgesehen ist, die auf der Seitenwand (14) des Hauptgefäßes angebracht und über den Behälterhaltern so angeordnet ist, daß beide geneigte Ebenen in Richtung auf die Behälterhalter (1, 56, 57) zusammenlaufen.

7. Vorrichtung nach Anspruch 1, **dadurch gekennzeichnet**, daß auf der Austragsöffnung (1a) jedes Behälterhalters ein äußerer Rand angeordnet ist und auf der Seitenwand (14) des Hauptgefäßes ein langgestrecktes Polsterprofil (21) befestigt ist, das sich über wenigstens einen Teil eines Raumes zwischen diesem äußeren Rand jeder Austragsöffnung der Behälterhalter und der Seitenwand des Hauptgefäßes erstreckt.

8. Vorrichtung nach Anspruch 2, **dadurch gekennzeichnet**, daß eine Einrichtung (8, 9, 17, 18, 19) vorhanden ist, durch die die Behälterhalter entfernbar in die Öffnungen (3, 3a) einpaßbar sind.

9. Vorrichtung nach Anspruch 8, **dadurch gekennzeichnet**, daß die Einrichtung zum entfernbaren Hineinpassen der Behälterhalter in die Öffnungen äußere Seitenwände auf jedem Behälterhalter eine Rückhaltenut (9) auf jeder äußeren Seitenwand und eine federnde Rückhalteeinrichtung (8) aufweist, die auf der Behälterhalterstützvorrichtung (2, 2a) befestigt und mit den Rückhaltenuten in Eingriff bringbar ist, um die Behälterhalter in den genannten Öffnungen zu halten.

10. Vorrichtung nach Anspruch 3, **dadurch gekennzeichnet**, daß Rückhalteöffnungen (18) im äußeren Band der drehbaren Scheibe angeordneter sind, eine federnde Rückhalteeinrichtung (19) in den Rückhalteöffnungen angeordnet ist, ein Befestigungselement (17) aus jedem Behälterhalter herausragt, das in eine dieser Rückhalteöffnungen einsteckbar ist, und daß auf jedem Befestigungselement (17) eine Ringnut (17a) ausgebildet ist, die mit der federnden Rückhalteeinrichtung (19) in Eingriff bringbar ist, um die Behälterhalter auf der drehbaren Scheibe entfernbar festzuhalten.

11. Vorrichtung nach Anspruch 1, **dadurch gekennzeichnet**, daß die Neigungseinrichtung in jeder der Austragsöffnungen zwei entgegengesetzte Enden, zwei in einer gemeinsamen Ebene befindliche Flansche (7) an den beiden entgegengesetzten Enden zur Abstützung eines Halses (4a) eines sich in einem Behälterhalter befindenden Behälters (4) und einen weiteren Flansch (6) aufweist, der parallel zu den in einer Ebene befindlichen Flanschen liegt und die Beschickungsöffnung an einem der beiden entgegengesetzten Enden begrenzt und mit dem Boden eines Behälters in Eingriff bringbar ist.

12. Vorrichtung nach Anspruch 1, **dadurch gekennzeichnet**, daß die Neigungseinrichtung in jeder der Austragsöffnungen zwei entgegengesetzte Enden, eine Stange (16) an einem dieser Enden und einen Flansch (6) an dem anderen dieser Enden zur Abstützung eines Halses eines Behälters aufweist, wenn dieser in einer Aussparung eines Behälterhalters aufgenommen wird.

13. Vorrichtung nach Anspruch 2, **dadurch gekennzeichnet**, daß sie ferner Stützflansche (5) auf jedem Behälterhalter aufweist, mit denen diese Behälterhalter auf der drehbaren Scheibe neben den genannten Öffnungen abstützbar sind.

14. Vorrichtung nach Anspruch 3, **dadurch gekennzeichnet**, daß sie ferner Ruhigstellungs- und Positionierungsmittel (52 - 55) aufweist, mit denen eine Schwenkbewegung der Behälterhalter in bezug auf die drehbare Scheibe verhindert wird.

15. Vorrichtung nach Anspruch 14, **dadurch gekennzeichnet**, daß die Ruhigstellungs- und Positionierungsmittel bestehen aus mehreren Aufnahmekörpern (54), die im wesentlichen rund um den Umfang beabstandet auf der unteren Oberfläche der drehbaren Scheibe mit Abstand neben dem Scheibenaußenrand angeordnet sind, einem Verbindungskörper (53), der aus jedem Behälterhalter herausragt, um mit einem der Aufnahmekörper (54) in lösbaren Eingriff zu treten und der an seinem Anfangsteil einen vergrößerten prismaförmigen Abschnitt (52) sowie eine Oberseite aufweist, die mit der Unterseite der rotierenden Scheibe neben deren Außenrand in Berührung tritt, sobald die Behälterhalter auf der drehbaren Scheibe befestigt werden, und wenigstens zwei Armkörpern (55), die von jedem Behälterhalter in der Nähe ihrer Enden abstehen und Oberflächen aufweisen, die mit der unteren Oberfläche der drehbaren Scheibe neben deren Außenrand in Berührung treten, sobald die Behälterhalter auf der drehbaren Scheibe (2) befestigt werden.

16. Vorrichtung nach Anspruch 1, **dadurch gekennzeichnet**, daß jeder Behälterhalter mit einer entsprechenden Rinneneinrichtung (31) verbunden ist, die eine austauschbare Einheit bildet, welche aus einer Kombination aus Behälterhalter und Rinneneinrichtung besteht.

17. Vorrichtung nach Anspruch 1, **dadurch gekennzeichnet**, daß sie ferner aufweist eine sich nach oben erstreckende Mittelachse für das Hauptgefäß und die Behälterhalterstützeinrichtung, eine zentrale Buchse (38), die auf dem Gefäß koaxial zu der Mittelachse drehbar befestigt ist, mehrere radiale Arme (36), die mit der zentralen Buchse ein einteiliges Ganzes bilden und in dem Hauptgefäß angeordnet sind, an diesen Armen befindliche, sich radial erstreckende äußere Enden, von denen jedes einen elastischen Abschnitt (36b, 36c) aufweist, der in Bezug auf die Drehrichtung der Arme rückwärts gebogen ist, um mit in bezug auf die Behälterhalter falsch positionierten Behältern in Eingriff zu treten und sie in Richtung auf einen Austragsbereich des Hauptgefäßes zu entfernen, und eine Einrichtung zum Antreiben der zentralen Buchse in einer Drehrichtung, die der Bewegungsrichtung der Behälterhaltereinrichtung entgegengesetzt ist.

18. Vorrichtung nach Anspruch 17, **dadurch gekennzeichnet**, daß jeder der radialen Arme einen ersten, sich radial erstreckenden, inneren, geraden und steifen Teil (36a), einen mittleren, elastischen und gekrümmten Teil (36b) und einen in radialer Richtung äußeren gekrümmten Teil (36c) aufweist, der mit einem glatten und flexiblen Element ausgestattet ist, das sich während des Betriebs zu einer Stelle über den Behälterhaltern erstreckt.

## Revendications

1. Machine pour positionner et aligner automatiquement des récipients (4), tels que des bouteilles en matière plastique, comportant:
un réceptacle principal (48) pour la réception d'une pluralité de récipients positionnés en vrac et possédant une partie centrale;
une paroi latérale (14) à l'intérieur de ce réceptacle principal;
un plan de fond (12, 29) dudit réceptacle principal possédant une portion périphérique séparée de ladite paroi latérale dégageant un espace au travers duquel les récipients, sur ce plan de fond, peuvent passer;
un moyen (2, 2a) de maintien des éléments de soutien des récipients, possédant une portion périphérique et étant supporté au-dessous dudit réceptacle pour le déplacement de cette portion périphérique dudit moyen le long d'un trajet au voisinage de cette portion périphérique dudit plan de fond;
un moyen (44, 45) pour entraîner ledit moyen de maintien des éléments de soutien des récipients le long dudit trajet;
un moyen (1, 56, 57) de soutien des récipients assemblé sur ledit moyen de maintien pour un déplacement conjoint et formant des cavités pour la réception et le maintien des récipients, en position couchée, à partir de cette portion périphérique dudit plan de fond;
une ouverture de déchargement (1b) dans ledit moyen de soutien des récipients, permettant le passage des récipients à son travers;
un moyen (28) servant de surface de support des récipients, s'étendant au-dessous dudit moyen (1, 56, 57) de soutien des récipients pour supporter les récipients en position couchée dans lesdites cavités pendant le déplacement desdits moyens de soutien des récipients;
un secteur de déchargement dans ce moyen servant de surface de support des récipients pour l'interruption de ce support dans une position prédéterminée de sorte que les récipients, logés dans lesdits moyens de soutien des récipients, passent à travers de ladite ouverture (1b) à ce secteur de déchargement;
des moyens de basculement (6, 7, 16) dans ledit moyen de soutien des récipients, retenant une partie de chaque récipient pour provoquer son basculement, dans une position prédéterminée, lorsque le récipient passe au travers desdites ouvertures de déchargement dans cette station de déchargement;
des moyens de chute (31) placés au-dessous et se déplaçant avec lesdits moyens de soutien des récipients pour la réception, l'orientation et le guidage des récipients, passant au travers desdites ouvertures de déchargement, dans une position prédéterminée, chaque moyen de chute possédant une portion inférieure de sortie,
**caractérisée** en ce que ledit moyen de soutien des récipients comporte une pluralité de réceptacles (1, 56, 57) pour le logement et le soutien des récipients, creux, en forme de cadre, interchangeables, possédant chacun d'eux des dimensions intérieures formant une desdites cavités, de manière à que chaque cavité contienne à son intérieur une grande partie du corps d'un récipient;
en ce que, chaque réceptacle pour le logement et le soutien des récipients, comporte une ouverture de chargement (1a) pour l'entrée d'un récipient à l'intérieur de ladite cavité; et en ce que un moyen du type plan incliné, qui se déplace conjointement avec les réceptacles pour le logement et le soutien des récipients et dirigé en haut vers la portion centrale dudit réceptacle principal (48), est placé entre ledit plan de fond (12, 29) dudit réceptacle principal et chacune desdites ouvertures de chargement (1a) desdits réceptacles (1, 56, 57) pour le logement et le soutien des récipients.

2. Machine, selon la revendication 1, caractérisée en ce que ledit moyen (2, 2a) de maintien des réceptacles pour le logement et le soutien des récipients consiste en un disque rotatif avec une pluralité d'ouvertures (3, 3a) dans sa partie périphérique, et en ce que lesdits réceptacles (1, 56, 57) pour le logement et le soutien des récipients, possèdent des dimensions extérieures pour faciliter l'emboîtement d'au moins une partie de son corps dans une de ces ouvertures dudit disque rotatif (2, 2a).

3. Machine, selon la revendication 1, caractérisée en ce que ledit moyen de maintien des réceptacles pour le logement et le soutien des récipients comporte un disque rotatif (2) possédant un bord extérieur, et en ce que lesdits réceptacles (1) pour le logement et le soutien des récipients sont agencées adjacentes audit bord extérieur dudit disque rotatif.

4. Machine, selon la revendication 1, caractérisée en ce que ladite ouverture de chargement (1a) chaque réceptacle pour le logement et le soutien des récipients comporte un bord intérieur, et en ce que ledit moyen du type plan incliné comporte une ailette (11) s'étendant vers le haut à partir dudit bord intérieur de chaque ouverture de chargement.

5. Machine, selon la revendication 1, caractérisée en ce que ladite ouverture de chargement de chaque réceptacle pour le logement et le soutien des récipients, possède un bord intérieur, et en ce que ledit moyen du type plan incliné comporte une paroi tronconique (20) agencée sur ces moyens (2) de maintien des réceptacles pour le logement et le soutien des récipients, ladite paroi possédant un bord inférieur espacé dudit bord intérieur de chacune desdites ouvertures de chargement desdits réceptacles pour le logement et le soutien des récipients.

6. Machine, selon la revendication 1, caractérisée en ce qu'elle comporte en outre un deuxième moyen (15) du type plan incliné, agencé sur ladite paroi latérale (14) dudit réceptacle principal et superposé aux dits réceptacles pour le logement et le soutien des récipients de manière à que les deux moyens du type plan incliné convergent vers lesdits réceptacles (1, 56, 57).

7. Machine selon la revendication 1, caractérisée en ce qu'elle comporte en outre:
un bord extérieur dans ladite ouverture de chargement (1a) de chacun desdits réceptacles pour le logement et le soutien des récipients;
un profil type bandelette, allongé (21), agencé en saillie sur ladite paroi latérale (14) dudit réceptacle principal, placé au dessus d'au moins une partie de l'espace formé entre ledit bord extérieur de chaque ouverture de chargement desdits réceptacles pour le logement et le soutien des récipients, et ladite paroi latérale dudit réceptacle principal.

8. Machine, selon la revendication 2, caractérisée en ce qu'elle comporte en outre des moyens (8, 9, 17, 18, 19) pour un emboîtement amovible desdits réceptacles pour le logement et le soutien des récipients dans lesdites ouvertures (3, 3a).

9. Machine, selon la revendication 8, caractérisée en ce que lesdits moyens pour un emboîtement amovible desdits réceptacles pour le logement et le soutien des récipients dans lesdites ouvertures comportent:
parois latérales extérieures dans chacun desdits réceptacles pour le logement et le soutien des récipients;
une rainure (9) de rétention dans chacune desdites parois latérales extérieures; et
des moyens de verrouillage, élastiques (8), agencés dans ledit moyen (2, 2a) de maintien des réceptacles pour le logement et le soutien des récipients et venant s'attacher dans lesdites rainures de rétention pour maintenir les dits réceptacles pour les récipients dans lesdites ouvertures.

10. Machine, selon la revendication 3, caractérisée en ce qu'elle comporte en outre:
des orifices (18) de rétention dans ledit bord extérieur dudit disque rotatif;
des moyens (19) de verrouillage élastique dans lesdits orifices de rétention;
un élément d'assemblage (17), en saillie, dans chaque réceptacle pour le logement et le soutien des récipients, arrangé pour insertion dans un desdits orifices de rétention; et
une rainure annulaire (17a) dans chacun desdits éléments d'assemblage (17) pour s'accoupler aux dits moyens (19) de verrouillage élastique assurant une rétention de condition amovible desdits réceptacles pour le logement et le soutien des récipients dans ledit disque rotatif.

11. Machine, selon la revendication 1, caractérisée en ce que lesdits moyens de basculement comportent:
deux extrémités opposées dans chacune desdites ouvertures de déchargement;
deux rebords (7) coplanaires, opposés, ces deux extrémités opposées aptes à soutenir un goulot (4a) d'un récipient (4) logé dans un élément de soutien de récipient; et
un autre rebord (6) parallèle audits rebords coplanaires limitant ladite ouverture de chargement au voisinage d'une desdites deux extrémités opposées et servant d'appui au fond d'un récipient.

12. Machine, selon la revendication 1, caractérisée en ce que lesdits moyens de basculement comportent:
deux extrémités opposées dans chacune desdites ouvertures de déchargement;
une tige (16) à l'une desdites extrémités et un rebord (7) dans l'autre extrémité aptes à soutenir un goulot d'un récipient logé dans une cavité d'un réceptacle pour le récipient.

13. Machine, selon la revendication 2, caractérisée en ce qu'elle comporte en outre des parois de support (5) dans chaque réceptacle pour le logement et soutien des récipients pour maintenir lesdits réceptacles sur ledit disque rotatif, au voisinage de ses ouvertures.

14. Machine, selon la revendication 3, caractérisée en ce qu'elle comporte en outre des moyens d'immobilisation et de positionnement (52-55) pour éviter le pivotement desdits réceptacles pour le logement et le soutien des récipients par rapport audit disque rotatif.

15. Machine, selon la revendication 14, caractérisée en ce que lesdits moyens d'immobilisation et de positionnement comportent:
une pluralité de membres femelle (54) essentiellement espacés circulairement, agencés sur la surface inférieure dudit disque rotatif et uniformément séparés par rapport au bord extérieur dudit disque;
un membre de branchement (53), faisant saillie dans chacun desdits réceptacles pour le logement et le soutien des récipients pour un attachement de condition amovible dans lesdits membres femelle (54), ce membre de branchement intégrant une portion de forme prismatique allongée (52) dans sa partie initiale et possédant une surface supérieure qui reste en contact sur ladite surface inférieure dudit disque rotatif au voisinage de son bord extérieur quand les dits réceptacles pour le logement et le soutien des récipients sont agencés dans ledit disque rotatif; et au moins deux membres d'ancrage (55), en saillie dans chacun desdits réceptacles pour le logement et le soutien des récipients au voisinage de ses extrémités, et possédant des surfaces supérieures qui restent en contact contre ladite surface inférieure dudit disque rotatif, au voisinage de son bord extérieur quand lesdits réceptacles pour le logement et le soutien des récipients sont agencés sur ledit disque rotatif (2).

16. Machine, selon la revendication 1, caractérisée en ce que chacun desdits réceptacles pour le logement et le soutien des récipients est solidaire d'un moyen de chute (31) formant une unité interchangeable qui combine un réceptacle pour le logement et le soutien des récipients et un moyen de chute.

17. Machine, selon la revendication 1, caractérisée en ce qu'elle comporte en outre:
un axe central dudit réceptacle principal et dudit moyen de maintien des réceptacles pour le logement et le soutien des récipients, ledit axe s'étendant vers le haut;
un manchon central (38) agencé en rotation dans ledit réceptacle principal coaxial audit axe central;
une pluralité de bras radiaux (36) solidaires dudit manchon central et positionnés à l'intérieur dudit réceptacle principal;
des extrémités extérieures desdits bras, chacune comportant un tronçon élastique (36b, 36c) incurvé par rapport à la direction de rotation desdits bras, pour contacter et déplacer les récipients incorrectement positionnés par rapport aux dits réceptacles pour le logement et le soutien des récipients en les amenant vers une zone de chargement dans le dit réceptacle principal; et
des moyens pour l'actionnement dudit manchon central en une direction de rotation opposée à la direction du mouvement desdits moyens de soutien de récipients.

18. Machine, selon la revendication 17, caractérisée en ce que chacun desdits bras radiaux comporte:
une première partie (36a), radiale, rectiligne et rigide;
une portion (36b) intermédiaire, élastique et courbée; et
une portion extérieure (36c) courbée comportant un élément souple et flexible, s'étendant, pendant le fonctionnement, vers une position au dessus desdits réceptacles pour le logement et le soutien des récipients.
